# EUROPEAN PATENT APPLICATION

(11) **EP 4 834 739 A1**
(43) Date of publication of application: **04.11.2026**
(21) Application number: 26175925.2
(22) Date of filing: 30.04.2026
(51) Int. Cl.: B62J 11/00, B62K 21/12

(54) **SUPPORT FOR FITTING ACCESSORIES TO A HANDLEBAR**

(30) Priority: 02.05.2025 IT 202500009828
(71) Applicant: Dedaindustrie S.r.l., 26010 Campagnola Cremasca (CR) (IT)
(72) Inventor: PARODI, Fausto Luigi, Milano (IT); LOCATELLI, Stefano, Crema (CR) (IT); LOCATELLI, Luca Andrea, Milano (IT)
(74) Representative: Luppi Intellectual Property S.r.l.

(57) **Abstract**

A support (1) for fitting accessories to handlebars (M) of a bicycle is defined by a body (2) that comprises a first part (3) and a second part (4) connected by a curved portion (5) so as to define a recess (6) shaped to be removably coupled with the handlebars (M), the first part (3) and the second part (4) being separated from one another in an insertion zone (7) opposite the curved portion (5), the body (2) being elastically deformable to enable the first part (3) and the second part (4) to be separated from one another to enable the body (2) to adapt to and receive inside the recess (6), the handlebars (M) for coupling together, the body (2) being made as a single piece and comprising a plurality of seats (8) configured to receive and support respective accessories.

## Description

### Background of the invention

The invention relates to a support for fitting accessories to handlebars. In particular, the support is a support for fitting extensions or aerial prolongations to handlebars of a bicycle.

In order to improve the position of a cyclist and aerodynamics, prolongations or extensions of the handlebars are used that are accessories that are applied to the handlebars of the bike. These extensions enable the cyclist to adopt an aerodynamic position, i.e. a posture that enables air resistance to be reduced and thus speed to be increased. Aerodynamic extensions are often used in cycling and triathlon competitions in order to maximize the performance of the cyclist.

In order to fix a pair of extensions to handlebars, two supports are used, each support is configured to receive a respective extension. Each known support comprises two distinct elements that are coupled together by two screws. Each support is fixed to a respective portion of the bar of the handlebars that extends between a side end of the handlebars and the connection of the handlebars arranged at the centre of the bar of the handlebars.

Known supports, whilst enabling extensions to be fixed to bicycle handlebars, have different drawbacks.

One drawback of known supports arises from the constructional and assembly complexity. In fact, known supports consist of different distinct pieces that have to be coupled together to be able to be fixed to a handlebar.

A further drawback of known supports arises from the difficulty of centring the extensions on the handlebars. In fact, in order to ensure correct cyclist posture, the extensions have to be arranged on the respective handlebar portions at the same distance from the connection of the handlebar, i.e. at the same distance from the centre line plane of the handlebar. Known supports do not enable the extensions to be centred easily and to be able to fix the supports and the extensions at a given distance from the connection of the handlebars different measurements have to be taken, with a resulting waste of time. Fitting known supports is thus complicated also because of the difficulty that is encountered in centring the supports.

It would accordingly be desirable to provide a solution that overcomes the drawbacks of the prior art, which enables extensions to be fixed to a handlebar simply and fast and which ensures centring the extensions on the handlebar.

### Summary of the invention

One object of the present invention is to improve known supports for fitting extensions.

A further object of the present invention is to provide a support that is constructionally simple and enables accessories to be fitted rapidly and, in particular, extensions to a handlebar, in particular, but not limited to, handlebars with non-constant and non-circular wing sections.

A still further object is to provide a support that ensures centring of the extensions to a handlebar.

Such objects and also other objects are achieved by a support for fitting accessories to a handlebar as specified in the appended claims.

### Short description of the drawings

The invention can be better understood and implemented with reference to the appended drawings that illustrate embodiments thereof by way of non-limiting example, in which:

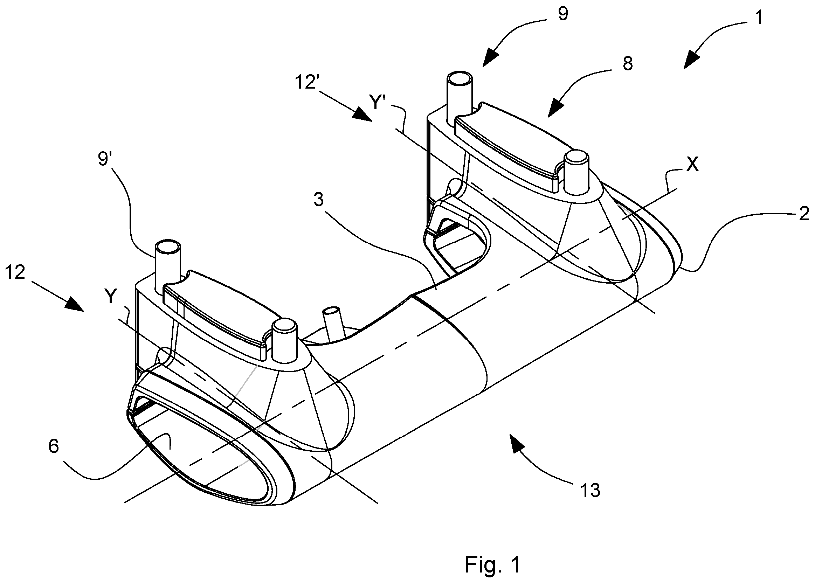

Figure 1 is a perspective view of a support for fitting accessories to a handlebar according to the present invention;

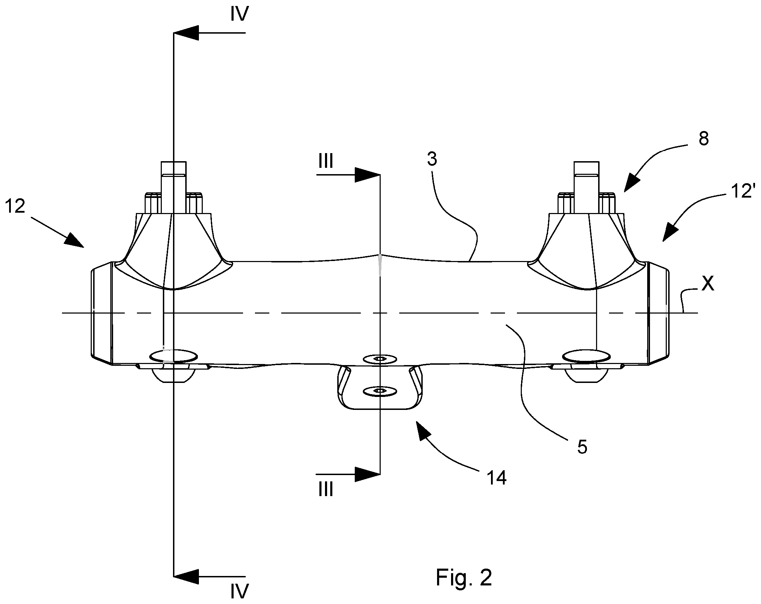

Figure 2 is a frontal view of the support of Figure 1;

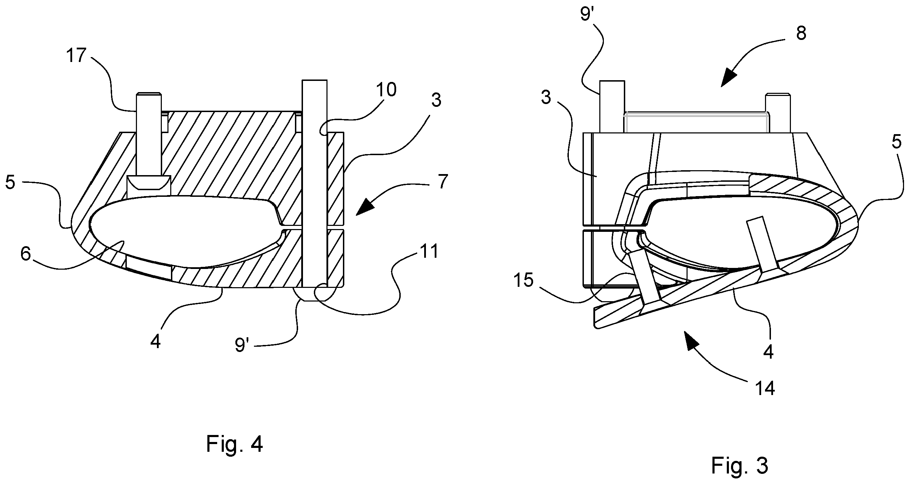

Figure 3 is a section view of the support of Figure;
Figure 4 is a section view of the support of Figure 1;

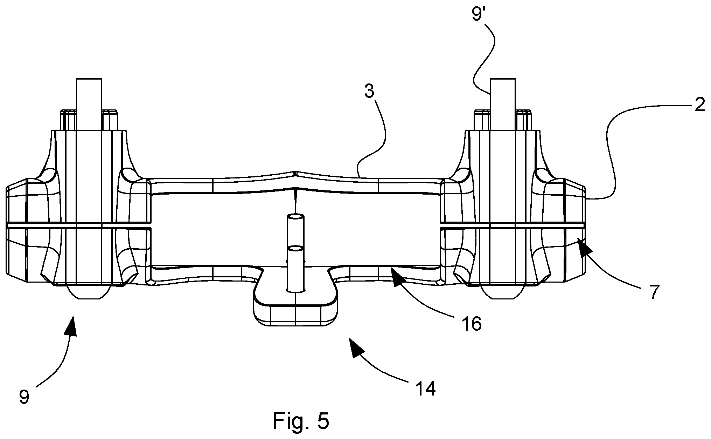

Figure 5 is a further frontal view of the support of Figure 1;

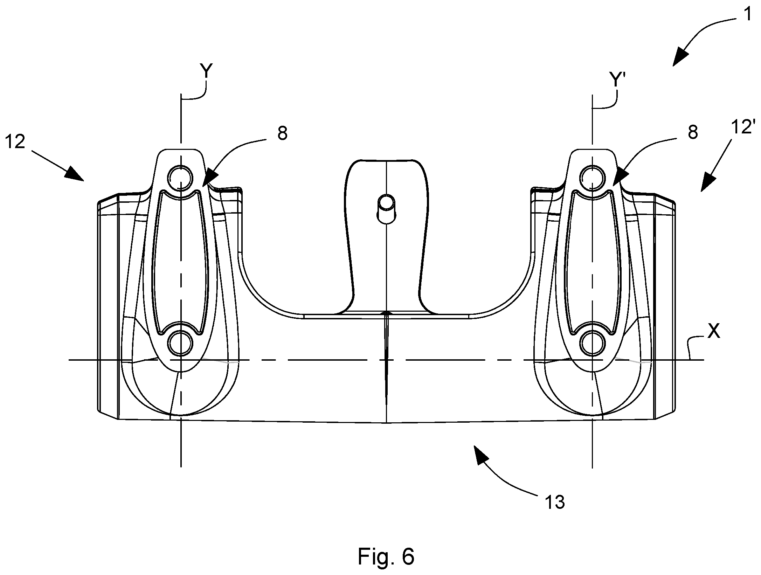

Figure 6 is a top plan view of the support of Figure 1;

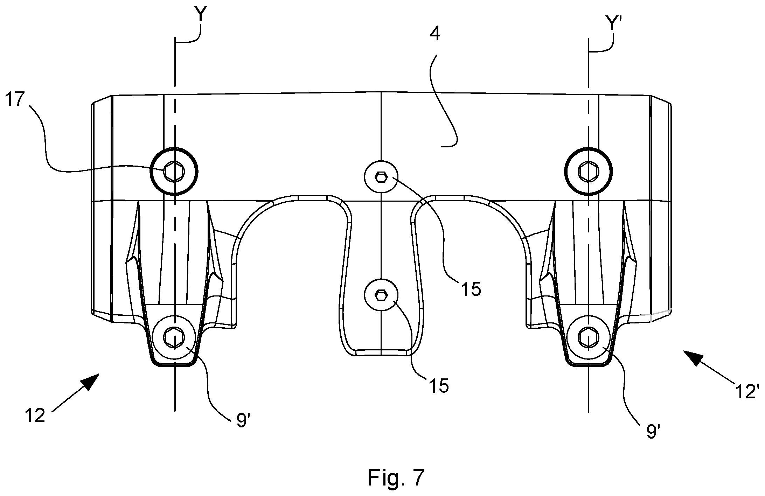

Figure 7 is a bottom plan view of the support of Figure 1;
Figure 8 is a perspective view of a handlebar to which a support according to the present invention is fixed that has accessories;
Figure 9 is a frontal view of the embodiment of Figure 8;
Figure 10 is a section view of the embodiment of Figure 8;
Figure 11 is a top plan view of the embodiment of Figure 8.

### Detailed description

With reference to the appended figures, a support 1 is disclosed for fitting accessories to a handlebar M of a bicycle.

The support 1 disclosed below is particularly configured to enable extensions to be fitted to handlebars with non-constant wing sections, in particular with non-circular sections. Nevertheless, the support 1 can be adapted even to handlebars with different geometries.

The support 1 is defined by a body 2 that comprises a first part 3 and a second part 4 connected by a curved portion 5 so as to define a recess 6 shaped to be removably coupled with the handlebar M. In one embodiment (disclosed here and shown in the embodiment drawings), the first part 3 comprises an upper part 3 and the second part 4 comprises a lower part 4. The first part 3 and the second part 4 are separated from one another in an insertion zone 7, i.e. an expandable portion of the support 1, opposite the curved portion 5. Nevertheless, according to other possible forms of implementation, the separating zone can be positioned differently; for example, the separating zone can be provided in a front zone of the support 1, or in an upper or lower region of the handlebar, or another position, depending on specific needs.

The body 2 is deformable elastically to enable the first part 3 and the second part 4 to be separated from one another to enable the body 2 to adapt to and receive inside the recess 6, the handlebar for coupling together. In other words, in the insertion zone 7, the first part 3 and the second part 4 are separated and, to couple the support 1 with the handlebar M, these upper 3 and lower 4 parts are moved away from one another so as to enable the support 1 to be coupled with the handlebar and to wrap a handlebar portion that is received in the recess 6. The curved portion 5, on the other hand, contains the first part 3 and the second part 4 continuously.

In use, the support 1 is fixed to the handlebar M so that the curved portion 5 faces the front wheel, whereas the insertion zone 7 faces the back wheel of the bicycle. This conformation enables the aerodynamic load of the bicycle to be decreased, the curved portion 5 being arranged so as to counter the flow of air during motion of the bicycle.

The body 2 is made of a single piece and comprises a plurality of seats 8 configured to receive and support respective accessories. In particular, the accessories comprise extensions or prolongations for the handlebar M that enable the cyclist to adopt an aerodynamic position.

For example, the support 1 comprises two seats 8 configured to receive a pair of extensions for the handlebar M. In particular, the body 2 is so shaped that these two seats 8 are arranged in use on opposite sides of, and at the same distance from, a centre line plane P of the handlebar M.

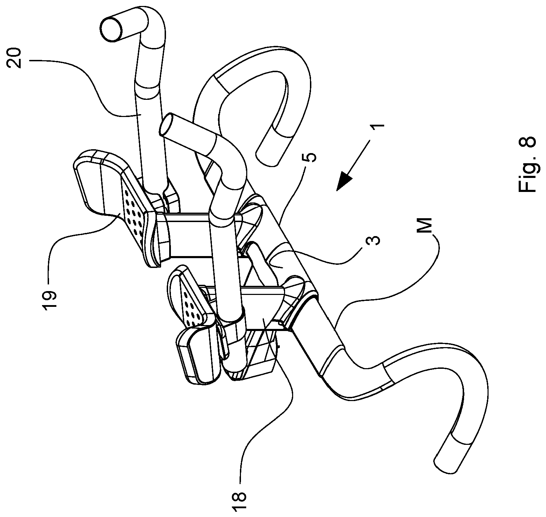

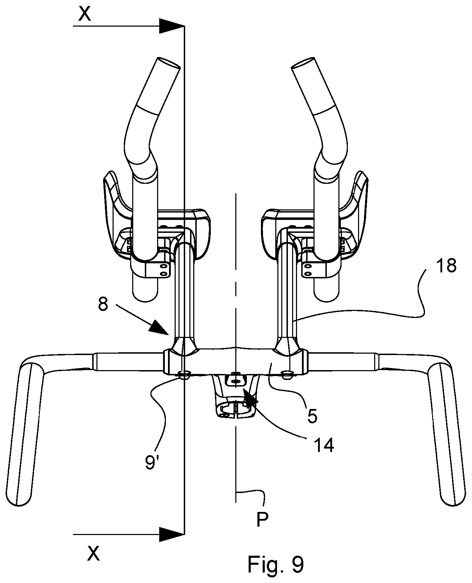

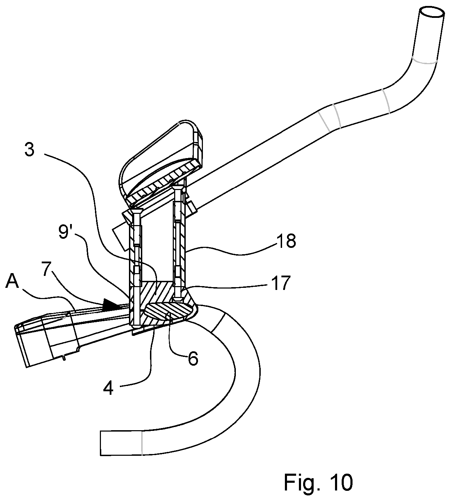

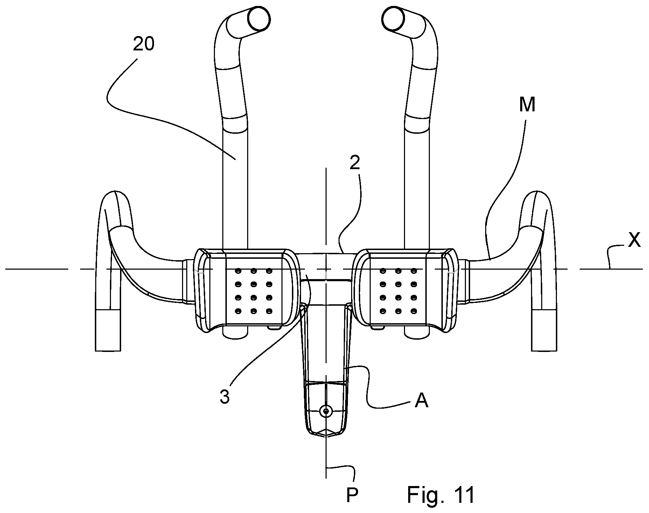

As illustrated in Figures 8-11, a respective column 18 can be fixed to each seat 8 that extends perpendicularly to the first part 3, in particular to the upper part 3. A support element 19 can be fixed to each column 18, in particular to support a forearm of the cyclist, and a prolongation 20 that can be gripped by the cyclist to adopt an aerodynamic position.

In the illustrated embodiment, the seats 8 are arranged on the upper part 3 of the body 2. Seats can nevertheless be provided on the lower part of the body.

The body 2 comprises a base portion 13 that extends with a longitudinal axis X intended, during use, to be parallel to the axis of extent of the handlebar portion received in the recess 6.

The body 2 further comprises two lateral portions 12, 12' that protrude from the base portion 13 along respective orthogonal axes Y, Y' that are orthogonal to the longitudinal axis X. The lateral portions 12, 12' are positioned at opposite ends of the base portion 13. In other words, the body 2 extends prevalently along the longitudinal axis X and further comprises two lateral portions 12, 12' that extend along respective orthogonal axes Y, Y' that are perpendicular to the longitudinal axis X. In one embodiment that is not illustrated, it is possible to provide lateral portions extending along axes that are transverse to the longitudinal axis X.

On the base portion 13, in a region interposed between the two lateral portions 12, 12', an opening 16 is obtained that is suitable for housing the handlebar M. In particular, the opening 16 is shaped to house a central handlebar portion situated at the connection A of the handlebar. For connection A of the handlebar the part is meant that connects the handlebar M to a steering column situated in the upper part of forks of a bicycle. In the appended figures, the steering column, the forks and the bicycle are not shown. The axis of the connection A of the handlebar M belongs to the centre line plane P of the handlebar M, i.e. the plane that divides the handlebar M into two halves.

On each of the two lateral portions 12, 12', a respective seat 8 is arranged, the body 2 is shaped to be adapted to the shape of the handlebar M so that the two seats 8, each arranged on the respective lateral portion 12, 12', are arranged, in use, on opposite sides of the, and at the same distance from, the centre line plane P of the handlebar M. In particular, in use, each of the two lateral portions 12, 12' is arranged on a respective lateral portion of the handlebar comprised between one end of the handlebar and the central portion of the handlebar.

Each lateral portion 12, 12' is defined by the first part 3 and by the second part 4 and is shaped to wrap the corresponding lateral portion of the handlebar with which it is intended to couple.

The first part 3 and the second part 4 is further configured to receive clamping means 9 that is suitable for locking the support 1 on the handlebar M.

In particular, the first part 3 and the second part 4 comprise respectively upper fixing holes 10 and lower fixing holes 11 at the insertion zone 7. These upper fixing holes 10 and lower fixing holes 11 are configured to receive the clamping means 9.

The clamping means 9, in the embodiment that is disclosed here by way of example and shown in the figures, comprises clamping screws 9', in particular two clamping screws 9', each clamped in the upper hole 10 and lower hole 11 arranged at each of the two lateral portions 12, 12'. According to other possible embodiments, the clamping means comprises clamps or connecting devices of quick release type, or other equivalent connecting means.

With reference to the embodiment disclosed and shown here, the clamping means 9 can moreover be configured to fix the accessories to the seats 8. In particular, each clamping screw 9' is clamped in the upper hols 10 and lower hole 11 of each lateral portion 12, 12' so that the head of the screw is arranged at the lower hole 11, whereas a portion of the screw shank protrudes from the upper hole 10. The portion of the screw shank that protrudes from the upper hole 10 enables an accessory to be fixed to the respective seat 8.

Further screws 17 can also be used to fix accessories to the respective seats 8. In particular, the further screws 17 protrude from the first part 3, in particular from the upper part 3, near the curved portion 5. In other words, the further screws 17 can be arranged at a zone of the upper part 3 nearer the curved portion 5 than the insertion zone 7. There are for example two further screws 17, one for each lateral portion 12, 12'.

In the embodiment shown in Figures 8-11, the clamping means 9, in particular the two clamping screws 9', and the further screws 17 are used to fix the columns 18 disclosed above to each seat 8.

In order to facilitate centring of the support 1 on the handlebar M further, centring means 14 can be provided that are configured to enable the support 1 to be fixed to the handlebar M so that the two seats 8 are arranged, in use, at the same distance from the centre line plane P of the handlebar M.

As illustrated, the centring means 14 can be arranged on the second part 4, in particular on the lower part 4.

The centring means 14 can comprise one or more centring pins 15 that are settable in the handlebar M. For example, one or more centring pins 15 can be set in openings obtained on the handlebar M or on the connection A of the handlebar M. These openings can be for example holes for fixing a bike computer. In particular, one or more centring pins 15 can be so arranged in use that the axis thereof extends over the centre line plane P of the handlebar or parallel thereto.

It is clear from this description that the support 1 according to the present invention achieves the set objects.

The support 1, being defined by a body 2 in a single piece and having the seats 8, is constructionally simple and couplable with handlebars M simply and fast, enabling a pair of extensions to be fitted extremely easily and precisely.

The particular shape of the support 1 further enables the seats 8 to be centred precisely on the handlebar M and arranged at the same distance from the centre line plane of the handlebar M. This shape thus enables the support 1 to be centred rapidly on the handlebars without risk of committing errors in positioning the extensions that could compromise riding comfort and aerodynamics.

## Claims

1. Support (1) for fitting accessories to a handlebar (M) of a bicycle, said support (1) being defined by a body (2) that comprises a first part (3) and a second part (4) connected by a curved portion (5) so as to define a recess (6) shaped to be removably coupled with said handlebar (M), said first part (3) and second part (4) being separated from one another in an insertion zone (7) opposite said curved portion (5), said body (2) being elastically deformable to enable said first part (3) and second part (4) to be spread apart from one another to enable said body (2) to adapt to, and receive inside said recess (6), said handlebar (M) for coupling together, said body (2) being made as a single piece and comprising a plurality of seats (8) configured to receive and support respective accessories.

2. Support (1) according to claim 1, wherein said first part comprises an upper part (3) and said second part comprises a lower part (4), said upper part (3) and lower part (4) being geometrically shaped to adapt to a handlebar (M) with a non-circular section, like a non-constant wing section.

3. Support (1) according to claim 1 or 2, wherein said body (2) comprises a base portion (13) that extends with a longitudinal axis (X) intended, during use, to be parallel to the axis of extent of the portion of handlebar (M) received in said recess (6), said body (2) comprising two lateral portions (12, 12') that extend from said base portion (13) along respective orthogonal axes (Y, Y') that are orthogonal to said longitudinal axis (X) and are positioned at opposite ends of said base portion (13).

4. Support (1) according to claim 3, wherein on said base portion (13), in a region interposed between the two lateral portions (12, 12'), there is obtained an opening (16) suitable for housing said handlebar (M).

5. Support (1) according to any one of the preceding claims, wherein said first part (3) and said second part (4) are configured to receive clamping means (9) suitable for locking said body (2) on said handlebar (M).

6. Support (1) according to claim 5, wherein said clamping means (9) is moreover configured to fix said accessories to said seats (8).

7. Support (1) according to any one of the preceding claims, wherein said seats (8) are arranged on said first part (3).

8. Support (1) according to claim 5 or 6 or 7, wherein said first part (3) and said second part (4) comprise respectively upper fixing holes (10) and lower fixing holes (11) at said insertion zone (7) configured to receive said clamping means (9).

9. Support (1) according to any one of claims 3 to 8, wherein on each of said two lateral portions (12, 12') a respective seat (8) is arranged, said body (2) being shaped to adapt to the shape of said handlebar (M) so that said two seats (8) are arranged, in use, on opposite sides of, and at the same distance from, a centre plane (P) of said handlebar (M).

10. Support (1) according to claim 9, comprising centring means (14) configured to enable said support (1) to be fixed to said handlebar (M) so that said two seats (8) are arranged, in use, at the same distance from said centre plane (P) of said handlebar (M).

11. Support (1) according to claim 10, wherein said centring means (14) is arranged on said second part (4).

12. Support (1) according to claim 10 or 11, wherein said centring means (14) comprises centring pins (15) fittable in said handlebar (M).

13. Support (1) according to any one of claims 3 to 12, wherein each lateral portion (12, 12'), defined by said first part (3) and by said second part (4), is shaped to envelop the corresponding portion of handlebar with which it is intended to couple.
